# FASCICULE DE BREVET EUROPEEN

(11) **EP 1 625 332 B1**
(45) Date de publication et mention de la délivrance du brevet: **05.08.2015**
(21) Numéro de dépôt: 04742566.5
(22) Date de dépôt: 23.04.2004
(51) Int. Cl.: F24H 1/43, F24H 8/00

(54) **ECHANGEUR DE CHALEUR A CONDENSATION EQUIPE D'UN RECUPERATEUR DE CHALEUR GAZ/AIR**
BRENNWERTWÄRMETAUSCHER MIT GAS/LUFT-WÄRMEREKUPERATOR
CONDENSATION HEAT EXCHANGER WITH A GAS/AIR HEAT COLLECTOR

(30) Priorité: 25.04.2003 FR 0305105
(43) Date de publication de la demande: 15.02.2006
(73) Titulaire: SERMETA, 29600 Morlaix (FR)
(72) Inventeur: LE MER, Joseph, 29252 Plouezoch (FR); GIANNONI, Rocco, I-20121 Milan (IT)
(74) Mandataire: Regimbeau
(86) Numéro de dépôt international: PCT/FR2004/000992
(87) Numéro de publication internationale: WO 2004/097311

(56) Documents cités:
- EP-A- 1 251 319
- WO-A-02/33316
- WO-A-94/16272
- DE-A- 10 302 708
- DE-U- 20 304 946
- FR-A- 2 503 845
- FR-A- 2 846 075
- GB-A- 2 033 570
- GB-A- 2 149 484
- US-A- 2 064 928
- US-A- 4 852 640
- US-A1- 2003 079 869

## Description

La présente invention concerne un échangeur de chaleur à condensation qui est associé - directement ou indirectement - à un brûleur, en particulier à gaz ou à fioul, et est équipé d'un récupérateur de chaleur gaz/air.

Un tel échangeur est destiné notamment à équiper une chaudière à gaz pour des applications domestiques, en vue d'alimenter un circuit de chauffage central et/ou de fournir de l'eau à usage sanitaire.

Avantageusement, mais non nécessairement, l'échangeur de chaleur qui fait l'objet de l'invention est du type comprenant une enveloppe qui délimite une enceinte à l'intérieur de laquelle est logé au moins un faisceau de tube(s) de section aplatie, du genre décrit dans le document EP-B-0 678 186, auquel on pourra se reporter au besoin.

Dans ce document est décrit un élément échangeur de chaleur qui consiste en un tube en matériau thermiquement bon conducteur, dans lequel un fluide caloporteur, par exemple de l'eau à réchauffer, est destiné à circuler.

Le tube est enroulé en hélice et possède une section droite aplatie et ovale dont le grand axe est sensiblement perpendiculaire à l'axe de l'hélice, et chaque spire du tube possède des faces planes qui sont écartées des faces de la spire adjacente d'un interstice de largeur constante, cette largeur étant sensiblement plus faible que l'épaisseur de ladite section droite, l'espacement entre deux spires voisines étant en outre calibré au moyen d'entretoises, lesquelles sont constituées par exemple par des bossages formés dans la paroi du tube.

Ce document décrit également des échangeurs de chaleur comportant plusieurs éléments tels que décrits ci-dessus, qui sont agencés de différentes manières dans les divers modes de réalisation exposés.

Un élément échangeur ainsi conçu est capable d'assurer un échange de chaleur très efficace entre, d'une part, des gaz très chauds, lesquels peuvent être générés directement par un brûleur monté dans l'enceinte, ou provenir d'une source extérieure, qui lèchent l'élément tubulaire, et, d'autre part, le fluide à réchauffer, tel que de l'eau, lequel circule à l'intérieur de celui-ci.

En effet, lors de son passage à travers l'interstice entre les spires, suivant une direction approximativement radiale, le flux de gaz chauds vient en contact avec une surface relativement étendue de la paroi de l'élément d'échangeur.

L'enveloppe composant les appareils à condensation du genre exposé ci-dessus, tout comme le (ou les) tube(s), peut être en métal, notamment en acier inoxydable.

Cependant, elle est avantageusement réalisée en matière plastique, comme cela est prévu dans les demandes de brevet français N° 02 12848 du 16 octobre 2002 (Publication FR-A-2 846 075) et N° 03 00775 du 24 janvier 2003 (Publication FR-A- 2 850 451).

Dans ce cas, l'échangeur comporte des moyens de contention mécanique du faisceau suivant sa direction axiale, aptes à absorber les efforts de poussée résultant de la pression interne du fluide qui y circule et qui tend à en déformer les parois, en évitant que ces efforts ne soit transmis à l'enveloppe.

On dissocie ainsi les deux rôles jusqu'ici dévolus à l'enveloppe, à savoir servir d'enceinte pour la circulation et l'évacuation des gaz chauds, ainsi que pour le recueil et l'évacuation des condensats, et, d'autre part, assurer la tenue mécanique du faisceau de tubes.

L'échangeur de chaleur à condensation selon l'invention est associé à un brûleur à gaz ou à fioul et comprend au moins un faisceau tubulaire parcouru par un fluide à réchauffer, en particulier de l'eau froide, qui est monté à l'intérieur d'une enveloppe imperméable aux gaz, par exemple en matière plastique, ledit faisceau tubulaire étant exposé à des gaz chauds générés par le brûleur tandis que l'enveloppe présente une manchette d'évacuation des fumées.

Selon un mode de réalisation préféré, l'échangeur de chaleur à condensation selon l'invention comprend deux faisceaux de tubes coaxiaux placés bout à bout, dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui de l'hélice, tandis que la largeur de l'interstice séparant deux spires adjacentes est constante et notablement plus faible que l'épaisseur de ladite section droite, ces faisceaux étant montés à l'intérieur d'une enveloppe imperméable aux gaz.

Le brûleur est disposé à l'intérieur de l'échangeur primaire.

Des moyens sont prévus pour faire circuler au moins un fluide à réchauffer, en particulier de l'eau froide, à l'intérieur du(des) tube(s) constitutif(s) desdits faisceaux, l'enveloppe susmentionnée présentant une manchette d'évacuation des gaz brûlés, et l'échangeur étant ainsi agencé que les gaz chauds alimentant l'échangeur, générés par le brûleur, traversent radialement, ou approximativement radialement, lesdits faisceaux en passant à travers les interstices séparant ses spires, une plaque déflectrice étant en outre intercalée entre ces deux faisceaux, et ainsi agencée, que lesdits gaz chauds traversent d'abord l'échangeur primaire, en traversant les interstices séparant ses spires de l'intérieur vers l'extérieur, puis l'échangeur secondaire, en traversant les interstices séparant ses spires cette fois de l'extérieur vers l'intérieur, après quoi ils sont évacués à l'extérieur via la manchette précitée.

Comme dans le dispositif représenté sur la figure 18 du document EP-B-0 678 186 déjà cité, la plaque déflectrice consiste avantageusement en un disque en matériau thermiquement isolant et réfractaire, par exemple à base de céramique, monté à l'extrémité libre du brûleur; ce disque est garni à sa périphérie d'un joint thermiquement isolant qui s'applique contre l'intérieur du faisceau.

L'évolution des réglementations concernant l'émission de gaz polluants provenant des appareils de chauffage domestiques incite de plus en plus les fabricants de chaudières à concevoir des appareils qui réduisent le plus possible les rejets qui risquent de polluer l'atmosphère.

Les chaudières à condensation fonctionnant avec un brûleur à gaz soufflé assurent une bonne combustion et permettent de récupérer de la chaleur latente contenue dans les fumées, grâce au phénomène de condensation, ce qui permet de réduire la quantité des rejets polluants, en comparaison avec des chaudières classiques.

Toutefois, la température de sortie des fumées est limitée par la température du fluide, notamment de l'eau, à réchauffer. Ainsi, si cette eau rentre dans l'échangeur à une température de 50°C et en sort à une température de 70°C, on ne peut pas envisager d'abaisser la température des fumées à une valeur inférieure à 50°C. En pratique cette valeur sera proche, du reste, de 70°C.

C'est bien la température de l'eau entrant dans l'appareil qui limite celle des fumées qui s'en échappent, avec leurs particules polluantes. La limite de la condensation est également dépendante de la température de l'eau entrante, au point que si cette température est égale ou supérieure à la température de rosée des fumées, il n'y a pas de condensation.

Or, pour des fumées résultant de la combustion du gaz naturel, ce point de rosée est de l'ordre de 55°C.

Les fumées générées par l'échangeur sont donc diffusées dans l'atmosphère à une température relativement élevée, produisant un panache blanc (dû à la vapeur d'eau qu'elle véhicule) inesthétique, avec des particules polluantes, et avec une perte de chaleur défavorable au rendement global de l'appareil.

Pour pallier ces difficultés, il est connu d'adjoindre à l'échangeur un échangeur additionnel gaz/air dont la fonction est de préchauffer l'air comburant capté à l'extérieur (et frais) avant de l'amener au brûleur, ceci à l'aide des fumées, c'est-à-dire les gaz brûlés, encore chauds, qui quittent l'échangeur.

Un système de ce genre est décrit par exemple dans le US-4,640,232.

Grâce à cet arrangement, c'est la température de l'air extérieur, et non plus la température de l'eau, qui détermine la condensation de la vapeur d'eau présente dans les fumées. Comme cette température est inférieure au point de rosée, on obtient une condensation quasi-totale, de sorte que les fumées rejetées sont froides et pratiquement dépourvues de particules polluantes, car celles-ci se retrouvent dans le condensat des fumées.

Par ailleurs, l'air qui parvient au brûleur étant chaud, la combustion est améliorée, et le rendement meilleur.

L'air capté à l'extérieur est généralement humide et pollué, notamment dans une atmosphère urbaine. Lors de son passage dans l'échangeur additionnel gaz/air, on observe également une condensation de la vapeur d'eau qu'il véhicule lorsqu'il rencontre les parois chaudes de l'échangeur. Les gouttelettes d'eau qui se forment piègent les particules polluantes qui se retrouvent ainsi dans le condensat de l'air entrant. L'échangeur additionnel gaz/air joue donc aussi un rôle de lavage de l'air comburant.

C'est donc un air propre, débarrassé de ses impuretés, qui est utilisé comme comburant, ce qui améliore également la qualité de la combustion et réduit notablement l'encrassement de l'échangeur principal.

On connait par ailleurs, par le document WO 02/33316, un échangeur de chaleur à condensation comportant notamment au moins un faisceau tubulaire parcouru par un fluide à réchauffer, monté à l'intérieur d'une enveloppe imperméable aux gaz, ledit faisceau étant exposé aux gaz d'un brûleur, l'enveloppe comportant une portion de paroi ayant la configuration d'un compartiment dans lequel est logé un échangeur récupérateur de chaleur gaz/air apte à transférer à de l'air capté de l'extérieur et fourni au brûleur une partie de la chaleur des fumées de sortie.

L'inconvénient des dispositifs connus, qui associent à un échangeur à condensation du type décrit plus haut un échangeur additionnel gaz/air, est qu'ils sont relativement encombrants, modérément efficaces, et d'un prix de revient élevé.

Comme l'appareil connu du WO 02/33316, l'échangeur de chaleur faisant l'objet de l'invention est un échangeur à condensation, associé à un brûleur à gaz ou à fioul, qui comprend au moins un faisceau tubulaire parcouru par un fluide à réchauffer, en particulier de l'eau froide, qui est monté à l'intérieur d'une enveloppe imperméable aux gaz, ce faisceau tubulaire étant exposé à des gaz chauds générés par le brûleur, tandis que ladite enveloppe présente une manchette d'évacuation des fumées et possède une portion de paroi ayant la configuration d'un compartiment dans lequel est logé un échangeur récupérateur de chaleur gaz/air apte à récupérer une partie de la chaleur véhiculée par les fumées quittant le faisceau tubulaire et se dirigeant vers la manchette de sortie afin de la transférer à de l'air qui est capté à l'extérieur de l'échangeur et alimente ledit brûleur.

La présente invention a pour objectif de proposer un échangeur à condensation dans lequel l'échangeur additionnel gaz/air se trouve intégré sous une compacité optimale, la conception de cet échangeur additionnel étant telle que sa présence ne grève que faiblement le poids et le prix de revient de l'appareil, tout en améliorant notablement les performances de celui-ci.

Cet objectif est obtenu, conformément à l'invention, grâce au fait que :
- d'une part, ledit compartiment consiste en une poche sensiblement plate qui s'étend verticalement, et est ouverte à ses extrémités haute et basse, ledit échangeur récupérateur de chaleur gaz/air étant inséré dans ce compartiment ;
- d'autre part, ledit échangeur récupérateur de chaleur gaz/air comporte deux séries de tubulures verticales adjacentes et alternées à paroi métallique, à savoir une première série permettant le passage des gaz encore chauds se dirigeant vers la manchette de sortie et une seconde série permettant le passage de l'air extérieur à réchauffer ;
et que l'une desdites séries de tubulures verticales est ouverte en parties haute et basse, autorisant le passage de l'air extérieur à réchauffer du haut vers le bas, tandis que l'autre série de tubulures verticales débouche à l'intérieur de l'enveloppe via des ouvertures d'entrée et de sortie des fumées qui sont ménagées dans la paroi du compartiment, respectivement à sa base et en sa partie supérieure ;
des moyens tels qu'un ventilateur étant en outre prévus pour transférer à l'entrée dudit brûleur l'air qui a été réchauffé par ledit récupérateur de chaleur gaz/air.

Par ailleurs, selon un certain nombre de caractéristiques additionnelles possibles de l'invention :
- lesdites tubulures ont une section droite aplatie, et sont adjacentes par leurs faces correspondant aux grands côté de cette section ;
- ledit échangeur récupérateur de chaleur gaz/air est réalisé à partir d'une plaque de tôle unique repliée en accordéon.

Il convient de remarquer que différents échangeurs de chaleur gaz/gaz ont déjà été proposés, qui possèdent des structures voisines de celles dudit échangeur récupérateur, en ce sens qu'ils comportent des canaux de section droite aplatie, répartis en deux séries alternées et adjacentes, chacun des deux gaz circulant dans l'une des deux séries.

A cet égard on peut mentionner par exemple les documents US 4 852 640, GB 2 033 570 et US 2003/0079869. Cependant, ces échangeurs gaz/gaz sont des appareils indépendants et autonomes, qui ne sont nullement intégrés au sein d'un échangeur à condensation.

Par ailleurs, on connaît du document GB 2 149 484 une chaudière à condensation comportant deux échangeurs élémentaires fonctionnant en série, à savoir un échangeur principal dans lequel les gaz brûlés directement issus du brûleur chauffent le fluide à réchauffer, en l'occurrence l'eau d'une installation de chauffage central, et un échangeur auxiliaire dans lequel ce fluide est chauffé par les gaz brûlés qui s'échappent vers l'extérieur.

Cet échangeur auxiliaire est disposé verticalement dans la partie arrière de la chaudière. Sa fonction, cependant, n'est pas de réchauffer l'air alimentant le brûleur.

Un autre objectif de l'invention, dans un mode de réalisation préféré de l'appareil, est de proposer une construction permettant d'enlever aisément l'échangeur additionnel gaz/air, de sorte qu'il soit possible de le laver périodiquement, afin d'éliminer les impuretés qu'il a captées.

A cet effet :
- ledit échangeur récupérateur de chaleur gaz/air est amovible et peut être facilement retiré du compartiment, notamment pour pouvoir être lavé ;
- ledit échangeur récupérateur de chaleur gaz/air a la configuration d'une cassette sensiblement parallélépipédique rectangle enfichable par translation de haut en bas dans le compartiment, cette cassette étant pourvue d'une coque rigide tubulaire de section droite rectangulaire, ouverte à ses extrémités inférieure et supérieure, lesdites tubulures verticales adjacentes et alternées étant disposées hermétiquement à l'intérieur de ladite coque, des fenêtres appropriées ménagées dans une grande face de la coque, à sa base et à sa partie haute, autorisant respectivement l'entrée et la sortie des fumées dans la première série de tubulures ;

- lesdites fenêtres basse et haute sont ainsi dimensionnées et positionnées qu'elles viennent chacune en regard de l'ouverture d'entrée et, respectivement, de sortie des fumées, qui sont ménagées dans la paroi du compartiment, lorsque la cassette est complètement insérée à l'intérieur de ce dernier ;
- ladite cassette est munie à sa base d'un joint périphérique apte à assurer son étanchéité dans le fond du compartiment ;
- ladite coque est munie à sa partie supérieure d'un rebord périphérique apte à assurer sa mise en appui et/ou sa fixation contre le bord supérieur du compartiment ;
- ledit échangeur récupérateur de chaleur gaz/air comporte une paire de plaques en forme de grilles présentant des zones pleines qui sont fixées par emboîtement et collage sur les bords supérieurs et inférieurs des deux séries de tubulures, de telle sorte qu'elles obturent celles de la première série recevant les fumées, ces zones pleines étant séparées par des fentes qui forment les embouchures des tubulures de la seconde série qui permettent le passage de l'air extérieur à réchauffer ;
- le fond de l'appareil présente des orifices de récupération et d'évacuation des condensats qui ont été générés aussi bien par la condensation des fumées que par celle de l'air comburant au sein de l'échangeur récupérateur de chaleur gaz/air.

On notera que le document FR 2 503 845 décrit une chaudière à condensation de puissance industrielle, pourvu d'un échangeur-condenseur qui est monté amovible à la sortie du corps de chauffe, ledit échangeur-condenseur étant issu d'un modèle de corps de chauffe de puissance de chauffe inférieure.

Cet échangeur-condenseur, cependant, a pour fonction de réchauffer l'eau d'un circuit de chauffage, et non de récupérer la chaleur résiduelle véhiculée par les gaz brûlés encore chauds qui quittent la chaudière dans le but de réchauffer l'air qui alimente le brûleur.

Dans un mode de réalisation avantageux, qui est un perfectionnement à un appareil du genre décrit dans le document EP-B-0 678 186 déjà cité, l'échangeur de chaleur à condensation selon l'invention comprend deux faisceaux de tubes coaxiaux placés bout à bout, dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui de l'hélice, tandis que la largeur de l'interstice séparant deux spires adjacentes est constante et notablement plus faible que l'épaisseur de ladite section droite, ces faisceaux) étant montés fixement à l'intérieur d'une enveloppe imperméable aux gaz, des moyens étant prévus pour faire circuler au moins un fluide à réchauffer, en particulier de l'eau froide, à l'intérieur du(des) tube(s) constitutif(s) desdits faisceaux, cette enveloppe présentant une manchette d'évacuation des gaz brûlés, l'échangeur étant ainsi agencé que les gaz chauds générés par le brûleur traversent radialement, ou approximativement radialement, lesdits faisceaux en passant à travers les interstices séparant ses spires, une plaque déflectrice étant en outre intercalée entre ces deux faisceaux, et ainsi agencée, que les gaz chauds générés par le brûleur traversent d'abord l'échangeur primaire, en traversant les interstices séparant ses spires de l'intérieur vers l'extérieur, puis l'échangeur secondaire, en traversant les interstices séparant ses spires de l'extérieur vers l'intérieur, après quoi ils sont évacués à l'extérieur via ladite manchette, ladite enveloppe possédant une portion de paroi ayant la configuration d'un compartiment et l'échangeur à condensation étant pourvu d'un échangeur récupérateur de chaleur additionnel gaz/air qui est inséré à l'intérieur de ce compartiment et est adapté pour récupérer une partie de la chaleur véhiculée par les gaz encore chauds circulant entre l'échangeur secondaire et la manchette de sortie et pour la transmettre à de l'air qui est capté à l'extérieur de l'échangeur et qui alimente ledit brûleur.

Conformément à l'invention:
- d'une part, ledit compartiment consiste en une poche sensiblement plate qui s'étend verticalement, et est ouverte à ses extrémités haute et basse, ledit échangeur récupérateur de chaleur gaz/air étant inséré dans ce compartiment ;
- d'autre part, ledit échangeur récupérateur de chaleur gaz/air comporte deux séries de tubulures verticales adjacentes et alternées à paroi métallique, à savoir une première série permettant le passage des gaz encore chauds circulant entre l'échangeur secondaire et la manchette de sortie et une seconde série permettant le passage de l'air extérieur à réchauffer ;

- l'une desdites séries de tubulures verticales est ouverte en parties haute et basse, autorisant le passage de l'air extérieur à réchauffer du haut vers le bas, tandis que l'autre série de tubulures verticales débouche à l'intérieur de l'enveloppe via des ouvertures d'entrée et de sortie des fumées qui sont ménagées dans la paroi du compartiment, respectivement à sa base et en sa partie supérieure ;
- des moyens tels qu'un ventilateur sont en outre prévus pour transférer à l'entrée dudit brûleur l'air qui a été réchauffé par ce récupérateur de chaleur gaz/air.

D'autres caractéristiques et avantages de l'invention apparaîtront de la description et des dessins annexés qui en représentent, à simple titre d'exemples non limitatifs des modes de réalisation possibles.

Sur ces dessins :
- la figure 1 est une vue de face schématique d'un premier mode de réalisation de l'appareil échangeur faisant l'objet de l'invention, coupé par un plan vertical médian référencé I-I sur la figure 2 ;
- la figure 2 est une vue de dessus schématique coupé par un plan horizontal médian référencé II-II sur la figure 1 ;
- les figures 3 à 6 sont des vues représentant l'échangeur gaz/air qui équipe appareil ;
- la figure 7 est une vue de face schématique et simplifiée d'un second mode de réalisation de l'appareil, dans lequel l'échangeur gaz/air est monté de façon amovible;
- les figures 8 à 12 représentent cet échangeur gaz/air, qui a la configuration d'une cassette extractible, la figure 8 étant une vue en perspective, la figure 9 une vue "éclatée", également en perspective, la figure 10 une vue de côté, la figure 11 une vue de face, et la figure 12 une vue de dessus de cette cassette ;
- la figure 13 est une vue de détail correspondant à la section en coupe référencée N-N sur la figure 12;
- la figure 14 est une vue de côté, en coupe, de la cassette, vue selon le plan vertical référencé C-C sur la figure 12;
- les figures 15, 16 et 17 sont des vues en coupe transversale, selon les plans horizontaux référencés respectivement S4-S4, S5-S5 et F-F sur les figures 10 et 11;
- la figure 18 est un détail, à plus grande échelle, d'une partie de la figure 14, inscrite dans un cercle en traits interrompus.

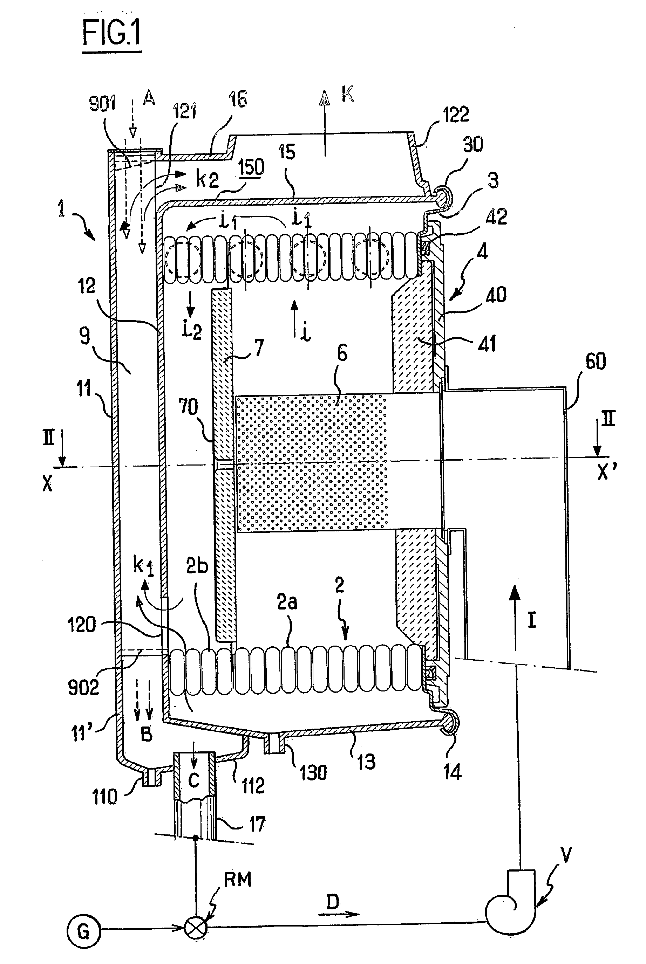

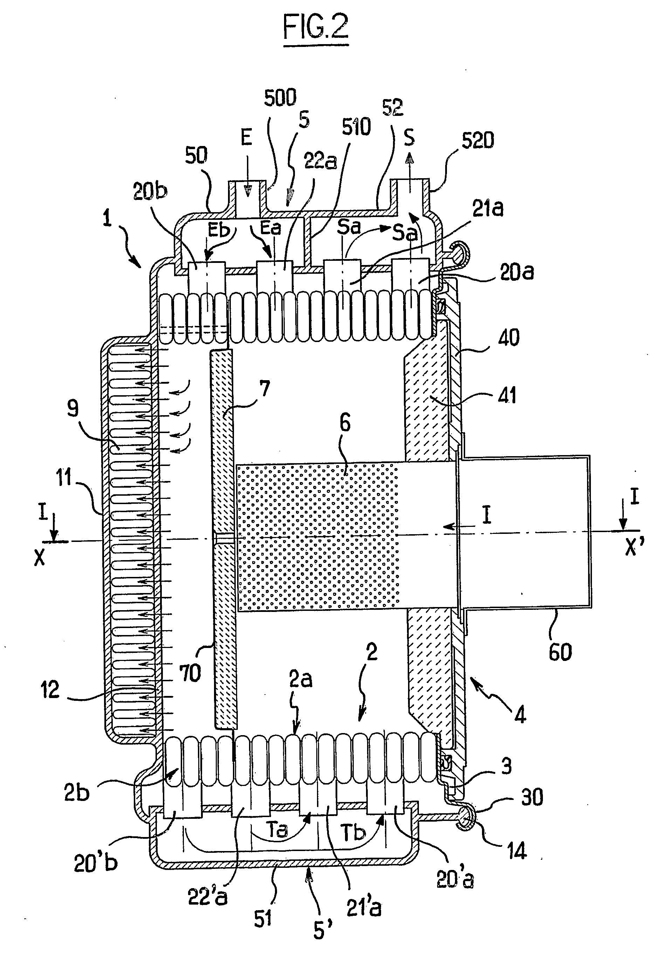

L'échangeur représenté sur les figures 1 et 2 comporte une coque, ou enveloppe, 1 qui délimite une enceinte à l'intérieur de laquelle est monté fixement un double faisceau tubulaire 2, lequel consiste en deux faisceaux de tubes coaxiaux placés bout à bout, dont l'un (2a) fait office d'échangeur primaire et l'autre (2b) d'échangeur secondaire.

Cette enceinte affecte approximativement une forme générale cylindrique, d'axe horizontal X-X'.

Dans le mode de réalisation représenté, le faisceau 2a consiste en un groupe de trois tubes adjacents formant un enroulement hélicoïdal, d'axe X-X'.

L'autre faisceau 2b est constitué d'un tube unique, également enroulé en hélice, et d'axe X-X'.

Les trois tubes formant le faisceau 2a et le tube formant le faisceau 2b sont identiques, de même longueur et de même diamètre. Le faisceau 2a a donc une dimension axiale trois fois supérieure à celle du faisceau 2b.

Il s'agit de tubes de section droite aplatie dont les grands côtés sont perpendiculaires à l'axe X-X'.

Des bossages (non représentés) prévus sur les grandes faces des tubes jouent le rôle d'entretoises, permettant de délimiter entre chaque spire un interstice de valeur calibrée, sensiblement constante.

Cet enroulement est destiné à être traversé intérieurement par au moins un fluide à réchauffer, qui est par exemple de l'eau.

Dans le mode de réalisation illustré, les quatre éléments tubulaires hélicoïdaux sont branchés par paires en parallèle, et les deux paires sont branchées en série, le fluide à réchauffer étant un fluide unique qui circule de la gauche vers la droite si on considère les figures 1 et 2.

Des collecteurs latéraux 5-5', qui sont fixés à l'enveloppe 1, permettent le branchement de l'appareil, de manière classique, sur un conduit d'amenée du fluide froid qui doit être réchauffé, le transfert de ce fluide d'une paire de tubes à la suivante, et l'évacuation du fluide réchauffé.

Chaque élément tubulaire possède des portions d'extrémité droite, c'est-à-dire d'axe rectiligne, et de section progressivement variable, dont la partie d'extrémité débouchante est circulaire.

Dans l'exemple illustré, les axes des deux portions d'extrémité d'un enroulement tubulaire s'étendent dans un même plan horizontal, tangent à l'enroulement, leurs embouchures étant dirigées à l'opposé l'une de l'autre, selon une disposition conforme à celle illustrée à la figure 24 du brevet européen 0 678 186 déjà cité. Cette disposition n'est bien évidemment pas obligatoire.

Les embouchures d'entrée et de sortie des éléments tubulaires sont serties convenablement, et de manière étanche, dans des ouvertures ad hoc prévues dans l'enveloppe 1, pour déboucher à l'intérieur des collecteurs 5, 5'.

Le collecteur d'entrée-sortie 5 comprend deux chambres adjacentes séparées par une cloison interne 510, à savoir une chambre d'entrée 50 munie d'un embout 500 et une chambre de sortie 52 munie d'un embout 520.

Les embouts 500 et 520 sont destinés à être raccordés sur un tuyau d'amenée du fluide à réchauffer et, respectivement, un tuyau d'évacuation du fluide réchauffé.

La chambre 50 est connectée aux portions d'extrémité d'entrée 20b, 22a des deux éléments de faisceau 2b, 2a, dans lesquels rentre le fluide à réchauffer ; la chambre 52 est connectée aux portions d'extrémité de sortie 20a, 21a des deux éléments de faisceau 2a, par lesquels sort le fluide réchauffé.

Le collecteur opposé 5' possède une chambre de transfert unique 51, qui est raccordée à la fois aux portions d'extrémité de sortie 20'b, 22'a des deux éléments de faisceau 2b, 2a, dans lesquels rentre le fluide à réchauffer et aux portions d'extrémité d'entrée 20'a, 21'a des deux éléments de faisceau 2a, par lesquels sort le fluide réchauffé.

Sur la figure 2, des flèches symbolisent le parcours du fluide passant dans ces enroulements.

Le flux **E** entrant par l'embout 500 est subdivisé en deux flux **Eb** et **Ea** qui parcourent chacun un enroulement, se rejoignent dans la chambre 51 et sont transférés - flèches **Ta, Tb** - dans les deux autre enroulements pour déboucher - flèches **Sa, Sb-** dans la chambre 52 et en ressortir - flèche **S -** par l'embout 520.

Avantageusement, l'enveloppe 1 est en matière plastique.

Elle est par exemple fabriquée par roto-moulage ou par moulage par injection.

L'enveloppe est faite par exemple de deux demi coquilles qui sont thermo-soudées l'une à l'autre après que les faisceaux tubulaires aient été installés à l'intérieur de l'une d'elles.

L'enveloppe 1 est ouverte sur l'un de ses côtés, en l'occurrence du côté situé sur la droite, si on considère les vues des figures 1 et 2.

En cours d'utilisation de l'appareil, une partie de la vapeur d'eau contenue dans les gaz brûlés se condense au contact des parois des tubes.

La référence 13 désigne la paroi de fond de l'enceinte ; de manière connue, ce fond est en pente, ce qui permet l'évacuation des condensats vers un orifice de sortie (bonde) 130.

La paroi arrière (du côté gauche sur les figures 1 et 2) de l'enveloppe est double; elle est formée d'une paroi principale verticale, qui porte la référence 12, et d'une portion de paroi externe 11, parallèle à la paroi 12, constituant le fond d'un renfoncement, ou cuvette, dans lequel est logé un échangeur de chaleur gaz/air 9.

La paroi supérieure 15 de l'enveloppe se raccorde, côté arrière, à la paroi principale 12.

Elle est surmontée par une cloison 16 qui se raccorde à la paroi externe 11.

Les parois 15 et 16 définissent un canal 150 qui relie la double paroi arrière 11-12 à une manchette d'évacuation 122 des gaz refroidis (fumées).

Bien entendu, l'orifice 130 est connecté à un conduit d'évacuation des condensats, tandis que la manchette 122 est branchée sur un conduit d'évacuation des fumées, par exemple un conduit de cheminée. Ces conduits ne sont pas représentés sur les figures.

Le côté droit (ouvert) de l'enveloppe est obturé par un élément de façade 3. Ce dernier est fixé sur toute sa périphérie par un rebord 30 qui est serti de manière hermétique aux gaz sur un bourrelet périphérique 14 bordant l'entrée de l'enveloppe.

Un joint d'étanchéité, par exemple en silicone (non représenté) peut avantageusement être prévu à ce niveau.

La plaque de façade 3, qui est par exemple en acier inoxydable, est normalement obturée par une porte amovible 4.

Dans le mode de réalisation représenté, la porte 4 est en deux parties ; elle est composée d'une plaque externe 40, en métal ou en matière plastique résistant à la chaleur, et d'une plaque interne 41, plus épaisse, en matériau thermiquement isolant et réfractaire, par exemple à base de céramique. Un joint annulaire à lèvres 42 logé dans une gorge appropriée ménagée dans la plaque 40 permet d'appliquer cette dernière de manière étanche aux fumées contre la face externe de la façade 3.

Chacune des plaques 40, 41 présente, en partie centrale, une ouverture circulaire qui est traversée par un brûleur 6, par exemple un brûleur à gaz, qui est solidarisé à la porte 4 par des moyens non représentés.

Des moyens appropriés raccordés sur le brûleur 6 permettent d'amener à l'appareil, via un conduit 60, un mélange d'un gaz combustible, tel que du propane, et d'air (comburant).

Ces moyens comportent un ventilateur **V** apte à insuffler le mélange gazeux, préalablement réalisé via un robinet mélangeur (vanne) **RM** dans le brûleur 6.

Ce dernier est un tube cylindrique à extrémité fermée, dont la paroi est percée d'une multitude de petits trous qui permettent le passage du mélange combustible, radialement de l'intérieur vers l'extérieur du tube.

La surface extérieure de cette paroi constitue la surface de combustion.

Un système d'allumage de type connu, non représenté, comportant par exemple une électrode génératrice d'une étincelle, est bien évidement associé au brûleur.

Ce dernier est situé coaxialement au milieu de l'enroulement 2, mais il ne s'étend pas sur toute sa longueur. Il se situe seulement à l'intérieur du faisceau 2a.

Ce dispositif est pourvu d'une plaque déflectrice 7, interposée entre les deux faisceaux 2a-2b.

La plaque 7 consiste en un disque en matériau isolant et réfractaire à la chaleur, par exemple à base de céramique ; il est supporté par une armature discoïde en forme de plaque mince 70 en acier inoxydable, de plus grand diamètre.

Le faisceau 2a est emprisonné axialement entre la porte 4 et le disque 7, dont la plaque-support 70 est fixée contre sa dernière spire (côté intérieur, sur la gauche).

De façon similaire, le faisceau 2b est emprisonné axialement entre la paroi arrière 12 et le disque 7, dont la plaque-support 70 est fixée contre sa dernière spire (du côté dirigé vers l'intérieur de l'enveloppe, sur la droite).

Dans l'hypothèse où l'enveloppe est en matière plastique, des moyens de contention mécanique de chaque faisceau, du genre décrit dans la demande de brevet français N° 02 12848 précitée, sont prévus afin d'éviter que les efforts de dilatation axiale ne soit transmis à la paroi de l'enveloppe.

De plus, ces faisceaux sont entourés de préférence d'une virole formant écran thermique, pour éviter que l'enveloppe ne soit directement exposée aux gaz chauds, selon une disposition analogue à celle décrite dans la demande de brevet français N° 03 00775, également précitée.

Ni les moyens de contention mécanique, ni la virole, n'ont été représentés ici afin de ne pas alourdir inutilement les dessins et la présente description.

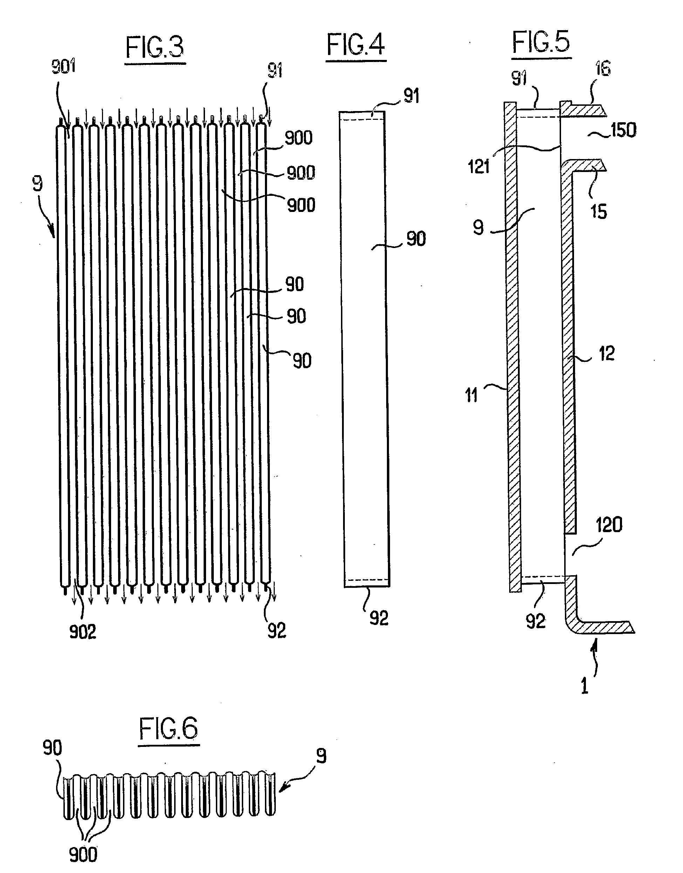

En nous référant maintenant aux figures 3 à 6, nous allons décrire la structure de l'échangeur récupérateur de chaleur gaz/air qui est installé dans la face arrière de l'appareil.

Comme déjà dit, la paroi arrière 12 de l'enveloppe 1 est verticale, et elle présente une double paroi 11-12 ; celle-ci délimite un compartiment vertical sensiblement plat, ouvert à ses extrémités haute et basse, et l'échangeur récupérateur de chaleur gaz/air 9 est inséré dans ce compartiment.

Cet échangeur de chaleur est réalisé à partir d'une plaque de tôle en acier inoxydable repliée « en soufflet d'accordéon » (voir figures 3, 4 et 6). Il s'agit d'une tôle très mince ayant par exemple une épaisseur de l'ordre de 0,3 mm.

Les faces correspondant aux replis de ce soufflet forment des bandes planes verticales parallèles, perpendiculaires aux parois 11 et 12.

Elles sont pincées et soudées deux à deux à leurs extrémités haute 91 et basse 92. Chaque paire de bandes soudées constitue une tubulure plate 90, ouverte vers l'avant (vers la droite si on considère les figures 4 et 5) et fermée à ses extrémités haute et basse.

L'espace 900 compris entre deux paires de bandes soudées, au contraire, est ouvert à la fois vers l'arrière (vers la gauche si on considère les figures 4 et 5) et à ses extrémités haute et basse.

Dans l'exemple illustré, l'échangeur 9 comporte une série de treize tubulures plates 90 alternées avec une série de douze espaces 900. Ces derniers ont la même largeur que les tubulures 90.

Cette structure en soufflet a une configuration en forme générale de boîtier plat rectangulaire, qui est emboîtable de haut en bas dans le compartiment délimité par les deux parois 11 et 12, dont la section est complémentaire de celle de ce boîtier..

Ce compartiment est ouvert à ses extrémités haute et basse.

La paroi interne 12 présente une paire de fenêtres (ouvertures rectangulaires) basse 120, et haute 121 ; cette dernière se situe au dessus de la portion de paroi supérieure 15, formant l'embouchure du canal 150 d'évacuation des gaz.

Ces ouvertures viennent en regard des portions inférieure et supérieure de la structure d'échangeur 9 lorsque celui-ci est inséré dans la paroi arrière 11-12. Elles s'étendent sur toute la largeur de cette structure.

Ainsi, chacune des tubulures 90 est fermée à ses extrémités haute et basse par les zones pincées et soudées 91, 92, à l'arrière par un pli du soufflet, et est obturée vers l'avant, sur la majeure partie de sa hauteur, par la paroi 12.

Elle débouche cependant à ses parties basse et haute, respectivement, via la fenêtre 120 à l'intérieur de l'appareil et, via la fenêtre 121 à l'intérieur du canal 150 qui conduit à la manchette 122.

Chacun des espaces 900 situé entre ces tubulures est ouvert à ses extrémités haute 901 et basse 902, est fermé à l'avant par un pli du soufflet, et est obturé à l'arrière par la paroi 11. Il constitue donc une sorte de cheminée qui débouche vers le haut et le bas uniquement.

Des moyens appropriés non représentés assurent le maintien et la bonne étanchéité de la structure d'échangeur 9 dans son logement, entre les deux parois 11 et 12.

La partie supérieure du compartiment 11-12 est connectée à l'atmosphère par une gaine d'amenée d'air non représentée, qui traverse par exemple une ouverture percée dans le mur de l'habitation équipée de cet appareil.

De l'air froid capté à l'extérieur peut donc parvenir, via cette gaine, à l'entrée supérieure 901 des cheminées 900.

La cloison 11 se prolonge vers le bas, au-delà de l'extrémité du compartiment 11-12 par une portion 11' qui se raccorde à un élément de fond incliné 112 solidaire du fond principal 13.

Le fond 112 est en pente, son point le plus bas présentant un orifice de récupération des condensats similaire à l'orifice 130, également branché à un conduit d'évacuation non représenté.

Ce fond 112 est en outre traversé, de manière étanche, par une tubulure 17 de transfert d'air. Celle-ci est connectée à l'une des deux entrées du robinet mélangeur, ou vanne, **RM** précité, dans l'autre entrée est connectée à une source de gaz carburant, du propane par exemple.

Cette vanne est réglée, bien sûr, pour fournir au brûleur 6, via le ventilateur V, la proportion adéquate de gaz et d'air.

On notera que le bord supérieur du la tubulure 17 fait saillie au dessus du fond 112, sur une certaine hauteur. De plus, son axe est décalé par rapport à celui de l'échangeur 9. Grâce à cette disposition, l'air qui quitte la base de cet échangeur pour pénétrer dans l'embouchure de la tubulure 17 doit suivre une trajectoire sinueuse, et le risque que des condensats véhiculés par le flux d'air ne pénètrent dans cette tubulure est ainsi diminué.

Nous allons maintenant expliquer le fonctionnement de l'appareil.

Le fluide à réchauffer, de l'eau froide par exemple, a été mis en circulation ; un mélange gazeux combustible, symbolisé par la flèche I, est amené au brûleur 6 par soufflage à partir du ventilateur V, via le conduit 60.

Le brûleur 6 ayant été allumé, les gaz chauds générés par ce dernier traversent tout d'abord la première partie 2a du faisceau 2 (située sur la droite de la plaque déflectrice 7a), en passant entre les interstices des tubes radialement, de l'intérieur vers l'extérieur (flèches i) ; ils ne peuvent pas s'échapper axialement en raison de la présence du disque déflecteur 7.

Grâce à la présence de la partie supérieure de la paroi de l'enveloppe, ils ne peuvent pas s'échapper non plus immédiatement par la manchette 122.

Ils sont canalisés vers la gauche (flèche i₁), et obligés de traverser la partie arrière 2b de l'échangeur, au-delà de la plaque 7, cette fois de l'extérieur vers l'intérieur (flèche i₂), réalisant un préchauffage de l'eau qui circule dans le faisceau tubulaire.

Leur seule issue est alors la fenêtre 120, qu'ils traversent (flèches k₁).

A ce stade, leur température a été sensiblement abaissée, par suite du transfert thermique intervenu entre les gaz chauds et le fluide parcourant les faisceaux 2a et 2b.

Grâce à la présence de l'échangeur récupérateur gaz/air 9, cette température va cependant pouvoir être encore abaissée.

Les gaz qui traversent la fenêtre 120 sont des fumées qui sont canalisées dans les tubulures 90, qu'elles parcourent de bas en haut, pour en ressortir par la fenêtre supérieure 121(flèches **k₂)** et enfin être évacués via le canal 150 et la manchette de sortie 122. (Flèche **K**).

Le ventilateur **V** a également pour fonction d'aspirer dans l'atmosphère de l'air frais en partie haute 901 de l'échangeur 9 et de le forcer à pénétrer dans les espaces tubulaires 900 (flèches **A),** et à les parcourir du haut vers le bas. Il s'opère ainsi un échange thermique avec les gaz encore chauds qui remontent dans les tubulures adjacentes 90.

Cet air réchauffé ressort à l'extrémité basse 902 des espaces tubulaires 900 (flèches **B).** Il pénètre dans la tubulure 17 (flèche **C),** est mélangé au gaz carburant **G,** et le mélange est transféré au brûleur (flèches **D** et **I);** le rendement global de l'appareil se trouve ainsi sensiblement amélioré, et la combustion est meilleure.

En effet, en traversant l'échangeur 9, les fumées lèchent des parois relativement froides, dont la température est nécessairement inférieure au point de rosée, ce qui provoque une condensation complète, ou quasi-complète, de la vapeur d'eau résiduelle s'y trouvant. Elles transmettent donc une quantité importante de leur chaleur latente à l'air comburant qui traverse également l'échangeur, à contre-courant.

Les impuretés présentes dans les fumées sont en grande partie piégées par le condensat.

Celui-ci s'écoule à la base des cheminées 90 à travers la fenêtre 120, traverse les interstices de la zone basse de l'enroulement 2b pour se mêler aux condensats qui se sont formés à l'intérieur de l'enveloppe, sur le fond 13, au niveau de l'orifice d'évacuation 130.

L'air capté à l'extérieur est froid et en général humide.

La vapeur d'eau qu'il véhicule a également tendance à se condenser sur les parois chaudes de échangeur 9.

Les gouttelettes qui s'y forment piègent les impuretés.

Le condensat chargé d'impuretés ruisselle dans les espaces tubulaires 900 et s'écoule par gravité sur le fond 112, vers l'orifice d'évacuation 110. C'est donc un air non seulement réchauffé, mais de plus sec et propre, qui est utilisé comme comburant, donnant ainsi une combustion optimale et réduisant les risques d'encrassement.

Le refroidissement complémentaire réalisé par l'échangeur gaz/air permet en outre de réduire les nuisances visibles liées à l'échappement des gaz brûlés hors de la manchette, à l'extérieur du bâtiment. Les panaches blancs résultant d'une trop grande différence de température entre ces gaz et l'air extérieur sont notablement réduits, voire supprimés.

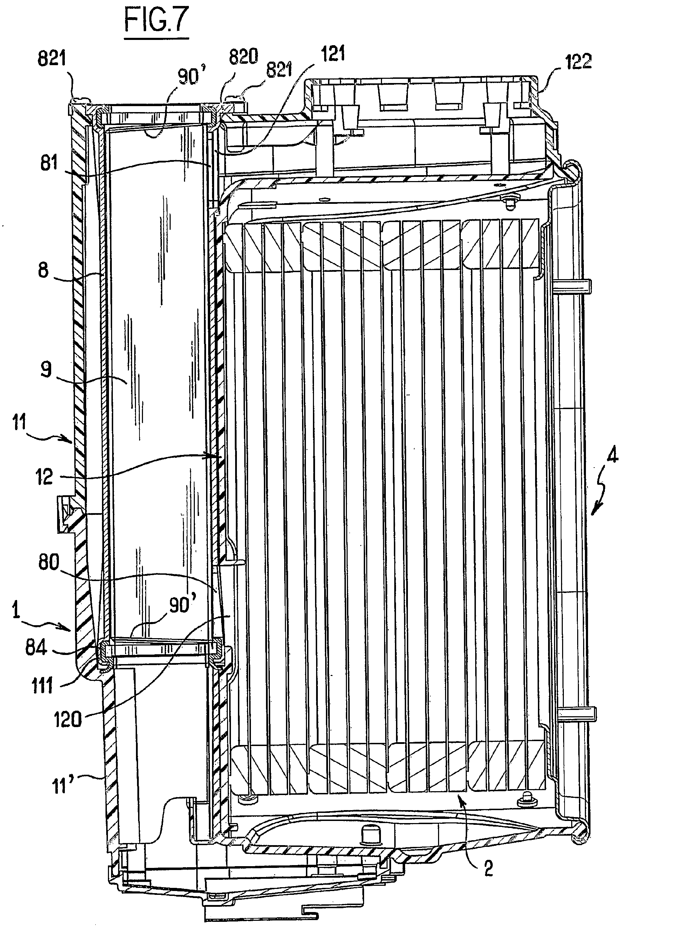

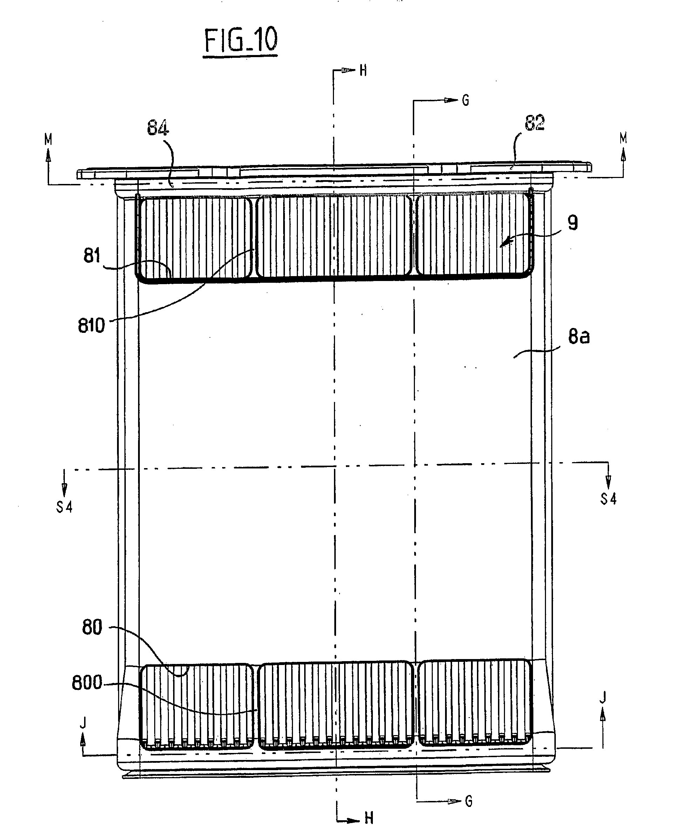

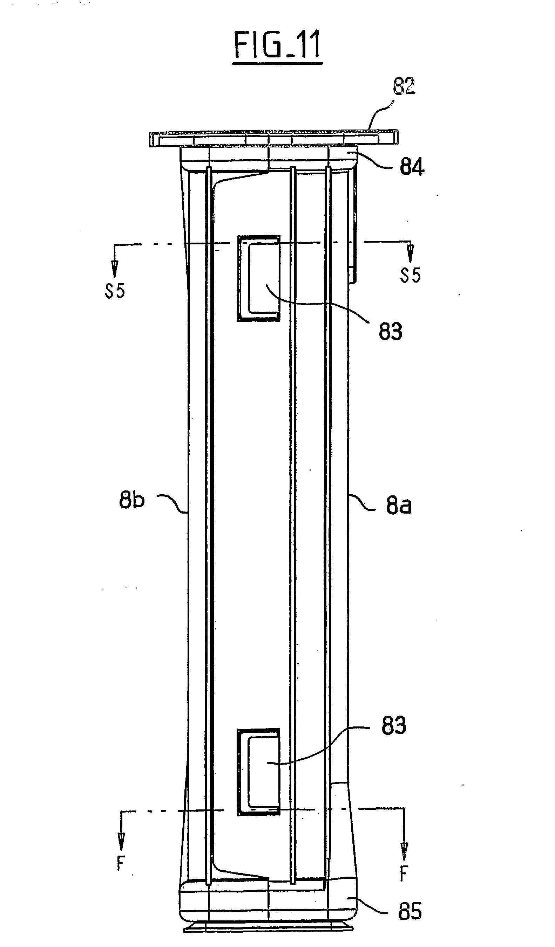

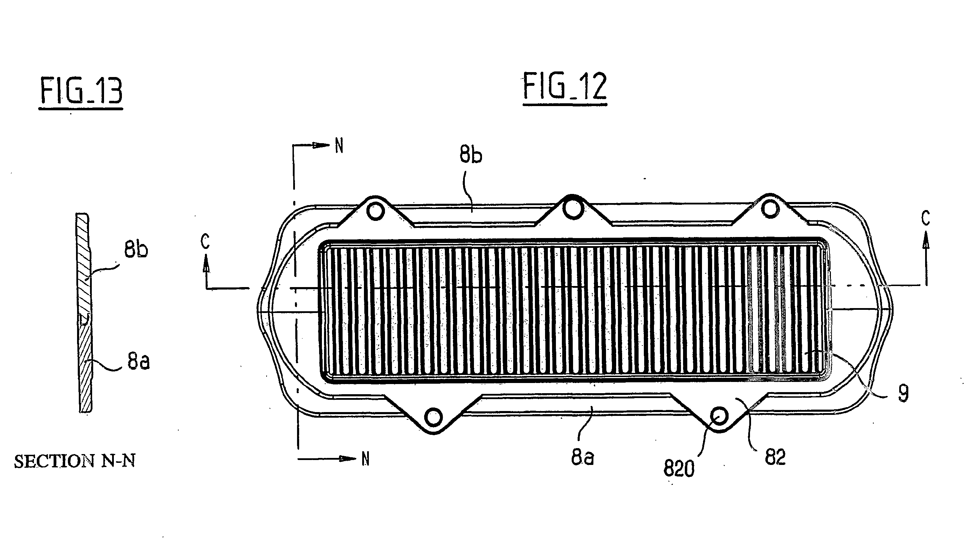

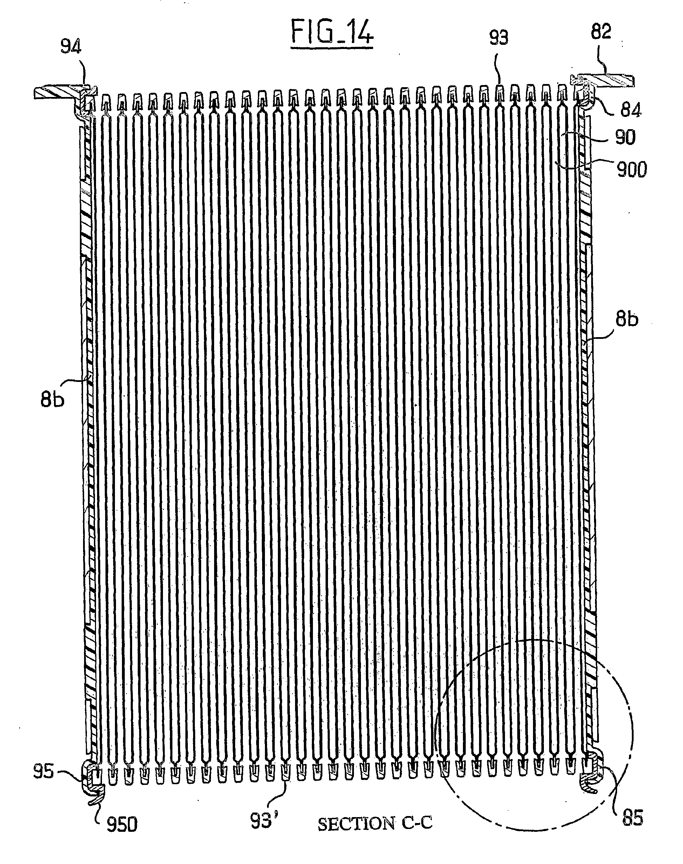

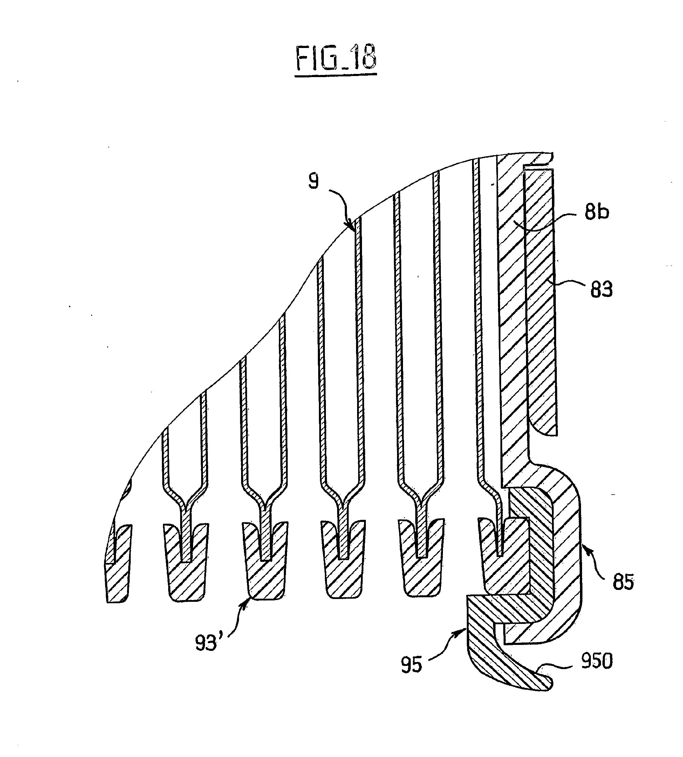

Dans le mode de réalisation illustré aux figures 7 à 18 l'échangeur additionnel gaz/air 9 a la configuration d'une cassette -ou boîtier- amovible.

Cet appareil, illustré à la figure 7, a la même conception générale que celui des figures 1 et 2. Il possède une enveloppe 1 en matière plastique injectée. La cassette constitutive de l'échangeur additionnel gaz/air 9 est insérée par translation verticale, de haut en bas, dans le compartiment délimité par les portions de paroi 11-12 de cette enveloppe, dont la forme est complémentaire de celle de la cassette.

Elle peut en être extraite facilement par traction de bas en haut.

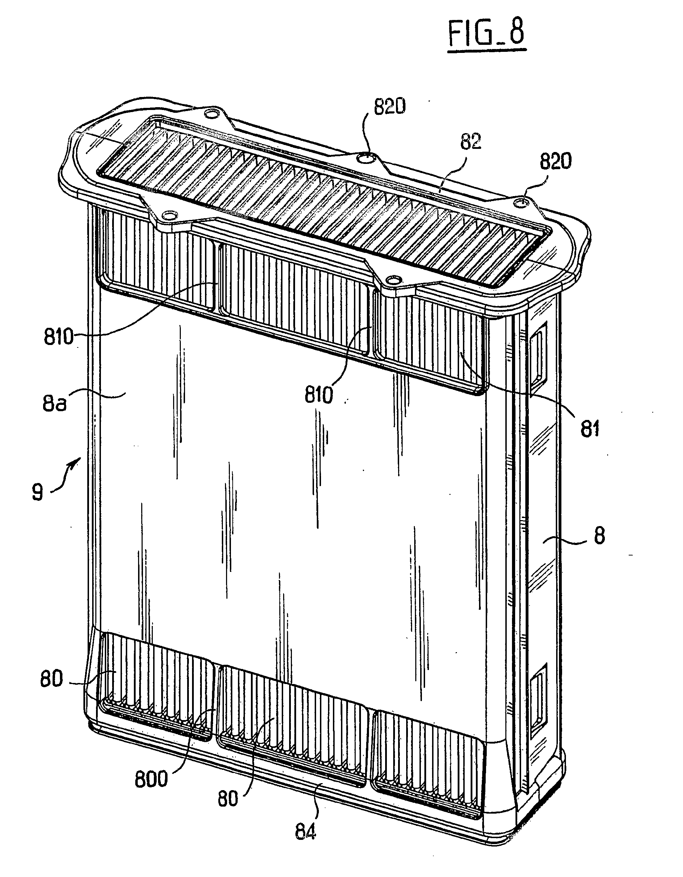

Comme on le voit plus particulièrement sur les figures 8 à 11, cette cassette a sensiblement la forme d'un parallélépipède rectangle, relativement plat, dont la largeur et la hauteur sont notablement plus grandes que l'épaisseur.

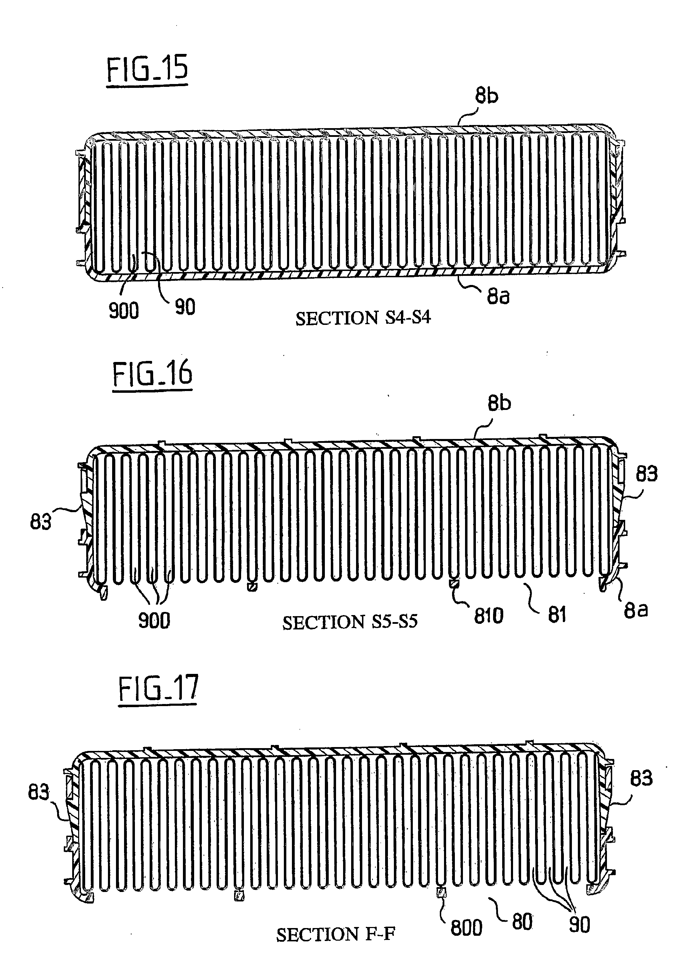

Il comporte une coque tubulaire 8 en matière plastique thermiquement et mécaniquement résistante. Celle-ci est ouverte à ses extrémités haute et basse. Elle a une section transversale rectangulaire, à coins arrondis (voir figure 15) et est composée de deux demi-coques 8a, 8b de section en "U" fixées l'une à l'autre par clipsage au moyen de pattes d'encliquetage latérales 83.

Cette coque emprisonne le corps de l'échangeur 9, dont la structure, à tubulures verticales 90-900, est similaire à celle du mode d'exécution précédent.

La partie supérieure de la coque 8 présente un rebord 82 qui permet son appui et sa fixation, à l'aide de vis traversant des trous 820 percés dans ce rebord, contre le bord supérieur du compartiment récepteur. Sur la figure 7, la tête de ces vis est référencée 821.

Les portions supérieure 84 (située sous le rebord 83) et inférieure 85 de la coque sont en surépaisseur, formant des renflements dirigés vers l'extérieur, dont le contour est ainsi dimensionné qu'il s'ajuste avec faible jeu, voire légèrement à force, à l'intérieur du compartiment récepteur 11-12.

L'une (8a) des deux demi-coques présente une grande face qui est traversée par des ouvertures rectangulaires horizontales (fenêtres) haute 81 et basse 80 courant sur toute sa largeur. En fait chacune de ces ouvertures est subdivisée en trois ouvertures plus petites adjacentes, séparées par des barrettes de rigidification verticales 800, respectivement 810. Leur fonction est d'éviter les déformations de la paroi de la coque à ce niveau.

Ces fenêtres 80, 81 sont destinées à venir en vis-à-vis des fenêtres 120 et, respectivement, 121, lorsque la cassette est correctement en place dans son compartiment récepteur (voir figure 7), autorisant le passage des fumées.

On notera que le rebord supérieur 82 comporte cinq pattes recevant les trous 820 pour le passage des vis de fixation. Trois pattes sont situées sur un côté de la cassette, et deux de l'autre côté (du côté des fenêtres 80 et 81).

Dans les parois du compartiment sont prévus cinq trous taraudés, ayant la même disposition, trois trous étant percés dans la paroi 11 et deux dans la paroi 12. Cet agencement fait office de détrompeur au moment du montage, évitant que la cassette ne soit placée dans une mauvaise orientation avec la face pleine de la demi-coque 8a en regard des fenêtres 120 et 121.

A la différence du mode de réalisation précédent, les différents replis en accordéon qui forment les tubulures verticales 90 et 900 ne sont pas soudés en parties supérieure et inférieure. Les zones supérieure et inférieure sont déformées et pincées deux à deux, et les portions pincées sont fixées l'une à l'autre au moyen de grilles en matière plastique supérieure 93, et inférieure 93', qui sont emboîtées et collées sur lesdites portions.

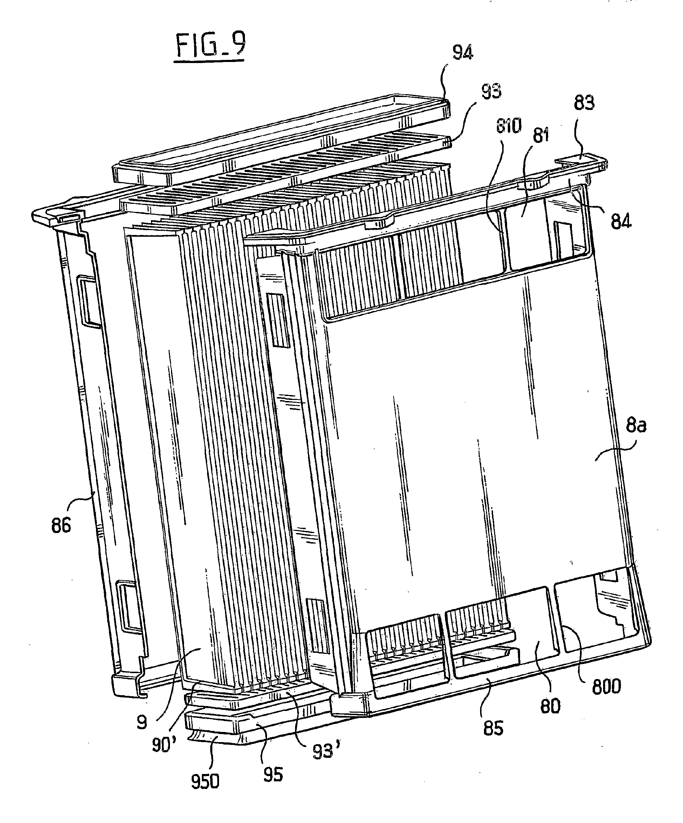

Plus précisément, ces grilles sont des plaques rectangulaires horizontales venant coiffer les faces inférieure et supérieure du corps métallique de l'échangeur (voir figure 9).

Leurs plages pleines sont des barrettes dont la face interne (tournée vers le corps métallique) présente une fente conformée pour s'emboîter sur une portion pincée, après interposition d'une colle appropriée. Ces plages pleines sont séparées par des fentes qui constituent les embouchures haute et basse 901, 902, des cheminées 900 traversées par l'air comburant.

Les cheminées 900 sont fermées du côté arrière par la paroi de la demi-coque 8b (voir figures 15 à 17) et du côté avant par les replis de la tôle.

Les cheminées 90 dans lequel passent les fumées sont obturées aux extrémités haute et basse par lesdites plages pleines des grilles 93, 93'. Elles sont fermées du côté avant, sauf au niveau des ouvertures 80 et 81 par la paroi de la demi-coque 8a (voir figures 15 à 17) et du côté arrière par les replis de la tôle.

Le pincement des extrémités des tubulures constituant les cheminées 90 est réalisé selon une ligne légèrement oblique 90' (voir figures 7 et 9), de sorte que leurs extrémités basses descendent vers la base de la fenêtre 80, et que l'écoulement et l'évacuation du condensat issu des fumées soit facilité.

Dans la mesure ou le corps métallique de l'échangeur 9 a une forme symétrique, permettant son montage indifféremment dans deux positions décalées à 180° (bas à la place du haut) dans la coque 8, afin d'éviter un contresens au montage, on retrouve également la ligne inclinée 90' à l'extrémité haute, bien qu'à cet endroit cette configuration n'ait pas réellement d'intérêt.

Entre la portion renflée supérieure 84 de la coque et la grille 93 est interposé un joint d'étanchéité périphérique 94 destiné à empêcher les fuites des fumées.

De même, un joint d'étanchéité périphérique 95 est interposé entre la portion renflée inférieure 85 de la coque et la grille 93'. Le joint 95 possède une lèvre flexible 950 tournée vers le bas, apte à venir s'appliquer contre l'épaulement périphérique 111 bordant le fond du compartiment 11-12, formant décrochement avec le prolongement de paroi 11'.

La cassette peut être retirée facilement de l'appareil, après enlèvement des vis qui la retiennent dans le compartiment de l'enveloppe, par une traction du bas vers le haut. Elle peut alors être lavée, par rinçage au jet d'eau, par exemple en la plaçant sous un robinet d'eau, et en l'orientant de telle manière que l'eau passe dans l'ensemble des tubulures.

Ce lavage peut se faire périodiquement, par exemple annuellement, à l'occasion du contrôle de la chaudière.

Il permet de débarrasser les tubulures 900, 90 de passage de l'air et des fumées, des particules polluantes qui se sont déposées au cours du temps sur leurs parois.

Une fois soigneusement lavée, la cassette peut être réinsérée dans son logement, par enfoncement du haut vers le bas, et fixée à l'enveloppe 1 au moyen des vis.

Il va de soi qu'il est possible, sans sortir du cadre de l'invention, de prévoir des faisceaux ainsi conçus et connectés qu'ils permettent de réchauffer plus d'un liquide.

L'invention s'applique également à des échangeurs à condensation dans lesquels il est possible de chauffer un (ou plusieurs) liquide(s), non seulement par les gaz de combustion générés par le brûleur, mais également par un gaz chaud additionnel, comme cela est prévu par exemple dans la demande de brevet français N° 03 05105, laquelle sert de fondement à la revendication de la date de priorité de la présente demande de brevet.

Les dimensions de l'appareil, régies notamment par la section, le diamètre, et la longueur des faisceaux tubulaires, ainsi que par le type de brûleur mis en oeuvre sont adaptés bien sûr à la puissance recherchée et aux conditions d'utilisation.

L'appareil est avantageusement équipé d'une sonde de température adaptée pour arrêter l'alimentation du brûleur lorsque la sonde détecte une température excessive prédéterminée.

## Revendications

1. Echangeur de chaleur à condensation, associé à un brûleur à gaz ou à fioul (6), qui comprend au moins un faisceau tubulaire (2) parcouru par un fluide à réchauffer, en particulier de l'eau froide, qui est monté à l'intérieur d'une enveloppe (1) imperméable aux gaz, ledit faisceau tubulaire (2) étant exposé à des gaz chauds générés par le brûleur (6) tandis que l'enveloppe (1) présente une manchette (122) d'évacuation des fumées, ladite enveloppe (1) possédant une portion de paroi ayant la configuration d'un compartiment (11, 12) dans lequel est logé un échangeur récupérateur de chaleur gaz/air (9) apte à récupérer une partie de la chaleur véhiculée par les fumées quittant le faisceau tubulaire (2) et se dirigeant vers la manchette de sortie (122) afin de la transférer à de l'air qui est capté à l'extérieur de l'échangeur et alimente ledit brûleur (6),
**caractérisé par le fait que** :
- d'une part, ledit compartiment consiste en une poche sensiblement plate qui s'étend verticalement, et est ouverte à ses extrémités haute et basse, ledit échangeur récupérateur de chaleur gaz/air (9) étant inséré dans ce compartiment ;
- d'autre part, ledit échangeur récupérateur de chaleur gaz/air (9) comporte deux séries de tubulures verticales adjacentes et alternées à paroi métallique (90-900), à savoir une première série (90) permettant le passage des gaz encore chauds se dirigeant vers la manchette de sortie (122) et une seconde série (900) permettant le passage de l'air extérieur à réchauffer ;
et que l'une desdites séries de tubulures verticales (900) est ouverte en parties haute et basse, autorisant le passage de l'air extérieur à réchauffer du haut vers le bas, tandis que l'autre série de tubulures verticales (90) débouche à l'intérieur de l'enveloppe (1) via des ouvertures d'entrée (120) et de sortie (121) des fumées qui sont ménagées dans la paroi (12) du compartiment, respectivement à sa base et en sa partie supérieure ;
des moyens tels qu'un ventilateur (V) étant en outre prévus pour transférer à l'entrée dudit brûleur (6) l'air qui a été réchauffé par ledit récupérateur de chaleur gaz/air(9).

2. Echangeur de chaleur selon la revendication 1, **caractérisé par le fait que** lesdites tubulures (90, 900) ont une section droite aplatie, et sont adjacentes par leurs faces correspondant aux grands côté de cette section.

3. Echangeur de chaleur selon la revendication 2, **caractérisé par le fait que** ledit échangeur récupérateur de chaleur gaz/air (9) est réalisée à partir d'une plaque de tôle unique repliée en accordéon.

4. Echangeur de chaleur selon l'une des revendications précédentes, **caractérisé par le fait que** ledit échangeur récupérateur de chaleur gaz/air (9) est amovible et peut être facilement retiré du compartiment, notamment pour pouvoir être lavé.

5. Echangeur de chaleur selon la revendication 4, **caractérisé par le fait que** ledit échangeur récupérateur de chaleur gaz/air (9) a la configuration d'une cassette sensiblement parallélépipédique rectangle enfichable par translation de haut en bas dans le compartiment, cette cassette étant pourvue d'une coque rigide tubulaire (8) de section droite rectangulaire, ouverte à ses extrémités inférieure et supérieure, lesdites tubulures verticales adjacentes et alternées étant disposées hermétiquement à l'intérieur de ladite coque (8), des fenêtres appropriées (80, 81) ménagées dans une grande face de la coque, à sa base et à sa partie haute, autorisant respectivement l'entrée et la sortie des fumées dans la première série de tubulures (90).

6. Echangeur de chaleur selon la revendication 5 **caractérisé par le fait que** lesdites fenêtres basse (80) et haute (81) sont ainsi dimensionnées et positionnées qu'elles viennent chacune en regard de l'ouverture d'entrée (120) et, respectivement, de sortie (121) des fumées, qui sont ménagées dans la paroi (12) du compartiment, lorsque la cassette est complètement insérée à l'intérieur de ce dernier.

7. Echangeur de chaleur selon la revendication 6, **caractérisé par le fait que** ladite cassette est munie à sa base d'un joint périphérique (95) apte à assurer son étanchéité dans le fond du compartiment.

8. Echangeur de chaleur selon l'une des revendications 5 à 7, **caractérisé par le fait que** ladite coque est munie à sa partie supérieure d'un rebord périphérique (82) apte à assurer sa mise en appui et/ou sa fixation contre le bord supérieur du compartiment.

9. Echangeur de chaleur selon l'une des revendications 5 à 8, **caractérisé par le fait que** ledit échangeur récupérateur de chaleur gaz/air (9) comporte une paire de plaques (93, 93') en forme de grilles présentant des zones pleines qui sont fixées par emboîtement et collage sur les bords supérieurs et inférieurs des deux séries de tubulures (90-900), de telle sorte qu'elles obturent celles de la première série (90) recevant les fumées, ces zones pleines étant séparées par des fentes qui forment les embouchures des tubulures de la seconde série (900) qui permettent le passage de l'air extérieur à réchauffer.

10. Echangeur de chaleur selon l'une des revendications précédentes, **caractérisé par le fait que** le fond de l'appareil présente des orifices (130, 110) de récupération et d'évacuation des condensats qui ont été générés aussi bien par la condensation des fumées que par celle de l'air comburant au sein de l'échangeur récupérateur de chaleur gaz/air (9).

11. Echangeur de chaleur à condensation, associé à un brûleur à gaz ou à fioul (6), qui comprend deux faisceaux de tubes coaxiaux (2a, 2b) placés bout à bout, dont l'un fait office d'échangeur primaire et l'autre d'échangeur secondaire, chacun de ces faisceaux consistant en un tube, ou en un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui (X-X') de l'hélice, tandis que la largeur de l'interstice séparant deux spires adjacentes est constante et notablement plus faible que l'épaisseur de ladite section droite, ces faisceaux (2a, 2b) étant montés fixement à l'intérieur d'une enveloppe (1) imperméable aux gaz, des moyens étant prévus pour faire circuler au moins un fluide à réchauffer, en particulier de l'eau froide, à l'intérieur du(des) tube(s) constitutif(s) desdits faisceaux (2a, 2b), cette enveloppe (1) présentant une manchette (122) d'évacuation des gaz brûlés, l'échangeur étant ainsi agencé que les gaz chauds générés par le brûleur (6) traversent radialement, ou approximativement radialement, lesdits faisceaux en passant à travers les interstices séparant ses spires, une plaque déflectrice (7) étant en outre intercalée entre ces deux faisceaux, et ainsi agencée, que les gaz chauds générés par le brûleur traversent d'abord l'échangeur primaire (2a), en traversant les interstices séparant ses spires de l'intérieur vers l'extérieur, puis l'échangeur secondaire (2b), en traversant les interstices séparant ses spires de l'extérieur vers l'intérieur, après quoi ils sont évacués à l'extérieur via ladite manchette (122), ladite enveloppe (1) possédant une portion de paroi ayant la configuration d'un compartiment (11, 12) et que l'échangeur à condensation est pourvu d'un échangeur récupérateur de chaleur additionnel gaz/air (9) qui est inséré à l'intérieur de ce compartiment (11, 12) et est adapté pour récupérer une partie de la chaleur véhiculée par les gaz encore chauds circulant entre l'échangeur secondaire et la manchette de sortie (122) et pour la transmettre à de l'air qui est capté à l'extérieur de l'échangeur et qui alimente ledit brûleur, **caractérisé par le fait que** :
- d'une part, ledit compartiment consiste en une poche sensiblement plate qui s'étend verticalement, et est ouverte à ses extrémités haute et basse, ledit échangeur récupérateur de chaleur gaz/air (9) étant inséré dans ce compartiment ;
- d'autre part, ledit échangeur récupérateur de chaleur gaz/air (9) comporte deux séries de tubulures verticales adjacentes et alternées à paroi métallique (90-900), à savoir une première série (90) permettant le passage des gaz encore chauds circulant entre l'échangeur secondaire et la manchette de sortie (122) et une seconde série (900) permettant le passage de l'air extérieur à réchauffer ;
et que l'une desdites séries de tubulures verticales (900) est ouverte en parties haute et basse, autorisant le passage de l'air extérieur à réchauffer du haut vers le bas, tandis que l'autre série de tubulures verticales (90) débouche à l'intérieur de l'enveloppe (1) via des ouvertures d'entrée (120) et de sortie (121) des fumées qui sont ménagées dans la paroi (12) du compartiment, respectivement à sa base et en sa partie supérieure ;
des moyens tels qu'un ventilateur (V) étant en outre prévus pour transférer à l'entrée dudit brûleur (6) l'air qui a été réchauffé par ce récupérateur de chaleur gaz/air (9).

## Patentansprüche

1. Kondensationswärmetauscher, kombiniert mit einem Gas- oder Heizölbrenner (6), der mindestens ein von einem zu erwärmenden Fluid, insbesondere kaltes Wasser, durchströmtes Rohrbündel (2) umfasst, das im Innern eines gasundurchlässigen Mantels (1) montiert ist, wobei das Rohrbündel (2) warmen Gasen ausgesetzt ist, die von dem Brenner (6) erzeugt werden, wogegen der Mantel (1) einen Rauchgasableitungsstutzen (122) aufweist, wobei der Mantel (1) einen Wandabschnitt mit der Konfiguration eines Fachs (11, 12) besitzt, in dem ein Gas/Luft-Wärmetauscher-Rekuperator (9) untergebracht ist, der imstande ist, einen Teil der von den das Rohrbündel (2) verlassenden und sich in Richtung des Ausgangsstutzens (122) bewegenden Rauchgasen beförderten Wärme zurückzugewinnen, um sie an die Luft zu übertragen, die außerhalb des Tauschers aufgefangen wird und den Brenner (6) versorgt,
**dadurch gekennzeichnet, dass**:
- einerseits das Fach aus einer relativ flachen Kammer besteht, die sich vertikal erstreckt und die an ihrem oberen und unteren Ende offen ist, wobei der Gas/Luft-Wärmetauscher-Rekuperator (9) in dieses Fach eingesetzt ist;
- andererseits der Gas/Luft-Wärmetauscher-Rekuperator (9) zwei Reihen benachbarte und wechselnde vertikale Rohre mit Metallwand (90-900) aufweist, nämlich eine erste Reihe (90), die den Durchgang der noch warmen Gase erlaubt, die sich in Richtung des Ausgangsstutzens (122) bewegen, und eine zweite Reihe (900), die den Durchgang der zu erwärmenden Außenluft erlaubt;
und dass eine der Reihen vertikaler Rohre (900) im oberen und unteren Teil offen ist, wodurch der Durchgang der zu erwärmenden Außenluft von oben nach unten erlaubt wird, wogegen die andere Reihe vertikaler Rohre (90) über Rauchgaseingangs- (120) und -ausgangsöffnungen (121), die in der Wand (12) des Fachs jeweils an ihrer Basis und in ihrem oberen Teil ausgebildet sind, in das Innere des Mantels (1) mündet;
wobei ferner Mittel wie ein Lüfter (V) vorgesehen sind, um die von dem Gas/Luft-Wärmetauscher-Rekuperator (9) erwärmte Luft an den Eingang des Brenners (6) zu übertragen.

2. Wärmetauscher nach Anspruch 1, **dadurch gekennzeichnet, dass** die Rohre (90, 900) einen abgeflachten Querschnitt haben und mit den Flächen, die den großen Seiten dieses Querschnitts entsprechen, benachbart sind.

3. Wärmetauscher nach Anspruch 2, **dadurch gekennzeichnet, dass** der Gas/Luft-Wärmetauscher-Rekuperator (9) aus einer einzigen, akkordeonförmig gefalteten Blechplatte hergestellt ist.

4. Wärmetauscher nach einem der vorangehenden Ansprüche, **dadurch gekennzeichnet, dass** der Gas/Luft-Wärmetauscher-Rekuperator (9) lösbar ist und problemlos aus dem Fach entfernbar ist, insbesondere um gewaschen werden zu können.

5. Wärmetauscher nach Anspruch 4, **dadurch gekennzeichnet, dass** der Gas/Luft-Wärmetauscher-Rekuperator (9) die Konfiguration einer etwa parallelepipedischen rechteckigen Kassette hat, die durch Verschieben von oben nach unten in das Fach einsteckbar ist, wobei diese Kassette mit einer starren rohrförmigen Schale (8) mit rechteckigem Querschnitt ausgestattet ist, die an ihrem unteren und oberen Ende offen ist, wobei die benachbarten und wechselnden vertikalen Rohre hermetisch im Innern der Schale (8) angeordnet sind, wobei geeignete Fenster (80, 81), die in einer großen Seite der Schale, an ihrer Basis und in ihrem oberen Teil, ausgebildet sind, jeweils den Eingang und den Ausgang der Rauchgase in der ersten Reihe Rohre (90) gestatten.

6. Wärmetauscher nach Anspruch 5, **dadurch gekennzeichnet, dass** das untere (80) und obere (81) Fenster derart bemessen und positioniert ist, dass sie jeweils gegenüber der Rauchgas-Eingangsöffnung (120) und der -ausgangsöffnung (121) sind, die in der Wand (12) des Fachs ausgebildet sind, wenn die Kassette vollständig in das Innere desselben eingesetzt ist.

7. Wärmetauscher nach Anspruch 6, **dadurch gekennzeichnet, dass** die Kassette an ihrer Basis mit einer Umfangsdichtung (95) ausgestattet ist, die imstande ist, ihre Dichtigkeit im Boden des Fachs sicherzustellen.

8. Wärmetauscher nach einem der Ansprüche 5 bis 7, **dadurch gekennzeichnet, dass** die Schale in ihrem oberen Teil mit einem Umfangsrand (82) ausgestattet ist, der imstande ist, ihre Abstützung und/oder Fixierung an der oberen Kante des Fachs sicherzustellen.

9. Wärmetauscher nach einem der Ansprüche 5 bis 8, **dadurch gekennzeichnet, dass** der Gas/Luft-Wärmetauscher-Rekuperator (9) ein Paar Platten (93, 93') in Gitterform aufweist, die volle Zonen aufweisen, die durch Rasten und Kleben an der oberen und unteren Kante der zwei Reihen Rohre (90-900) derart befestigt sind, dass sie die der ersten Reihe (90), die die Rauchgase empfangen, verschließen, wobei diese vollen Zonen durch Schlitze getrennt sind, die die Mündungen der Rohre der zweiten Reihe (900) bilden, die den Durchgang der zu erwärmenden Außenluft gestatten.

10. Wärmetauscher nach einem der vorangehenden Ansprüche, **dadurch gekennzeichnet, dass** der Boden des Geräts Auffang- und Ableitungsöffnungen (130, 110) der Kondensate aufweist, die sowohl durch die Kondensation der Rauchgase als auch durch die der Verbrennungsluft innerhalb des Gas/Luft-Wärmetauschers-Rekuperators (9) entstehen.

11. Kondensationswärmetauscher, kombiniert mit einem Gas- oder Heizölbrenner (6), der zwei koaxiale Rohrbündel (2a, 2b) umfasst, die aneinander platziert sind, von denen einer als primärer Tauscher und der andere als sekundärer Tauscher dient, wobei jedes dieser Bündel aus einem Rohr oder aus einer Gruppe von Rohren besteht, die aneinander angeordnet sind, die eine schraubenförmige Wicklung bilden, wobei die Wand des (der) Rohr(e) aus einem thermisch gut leitenden Material hergestellt ist und einen ovalen und abgeflachten Querschnitt aufweist, von dem die große Achse senkrecht oder etwa senkrecht zu der Achse (X-X') der Schraube ist, wogegen die Breite des Spalts, der zwei benachbarte Windungen trennt, konstant und erheblich kleiner als die Dicke des Querschnitts ist, wobei diese Bündel (2a, 2b) fest im Innern des gasundurchlässigen Mantels (1) montiert sind, wobei Mittel vorgesehen sind, um mindestens ein zu erhitzendes Fluid, insbesondere kaltes Wasser, im Innern des (der) Rohrs (Rohre), das (die) Bündel (2a, 2b) bildet (bilden), zum Zirkulieren zu bringen, wobei dieser Mantel (1) einen Ableitungsstutzen (122) der verbrannten Gase aufweist, wobei der Tauscher derart ausgebildet ist, dass die von dem Brenner (6) erzeugten warmen Gase die Bündel radial oder ungefähr radial durchqueren, indem sie durch die Schlitze strömen, die seine Windungen trennen, wobei ferner eine Deflektorplatte (7) zwischen diesen beiden Bündeln zwischengestellt und derart ausgebildet ist, dass die von dem Brenner erzeugten warmen Gase zunächst den primären Tauscher (2a) durchqueren, indem sie die Spalte durchqueren, die seine Windungen trennen, von innen nach außen, und danach den sekundären Tauscher (2b), indem sie die Spalte durchqueren, die seine Windungen trennen, von außen nach innen, wobei sie danach über den Stutzen (122) nach außen abgeleitet werden, wobei der Mantel (1) einen Wandabschnitt mit der Konfiguration eines Fachs (11, 12) besitzt und wobei der Kondensationstauscher mit einem zusätzlichen Gas/Luft-Wärmetauscher-Rekuperator (9) ausgestattet ist, der im Innern dieses Fachs (11, 12) eingesetzt ist und der ausgebildet ist, um einen Teil der Wärme, die von den noch warmen Gasen befördert wird, die zwischen dem sekundären Tauscher und dem Ausgangsstutzen (122) zirkulieren, zurückzugewinnen, und um sie an die Luft zu übertragen, die außerhalb des Tauschers aufgefangen wird und die den Brenner versorgt, **dadurch gekennzeichnet, dass**:
- einerseits das Fach aus einer relativ flachen Kammer besteht, die sich vertikal erstreckt und die an ihrem oberen und unteren Ende offen ist, wobei der Gas/Luft-Wärmetauscher-Rekuperator (9) in dieses Fach eingesetzt ist;
- andererseits der Gas/Luft-Wärmetauscher-Rekuperator (9) zwei Reihen benachbarte und wechselnde vertikale Rohre mit Metallwand (90-900) aufweist, nämlich eine erste Reihe (90), die den Durchgang der noch warmen Gase erlaubt, die zwischen dem sekundären Tauscher und dem Ausgangsstutzen (122) zirkulieren, und eine zweite Reihe (900), die den Durchgang der zu erwärmenden Außenluft erlaubt;
und dass eine der Reihen vertikaler Rohre (900) im oberen und unteren Teil offen ist, wodurch der Durchgang der zu erwärmenden Außenluft von oben nach unten erlaubt wird, wogegen die andere Reihe vertikaler Rohre (90) über Rauchgaseingangs- (120) und -ausgangsöffnungen (121), die in der Wand (12) des Fachs jeweils an ihrer Basis und in ihrem oberen Teil ausgebildet sind, in das Innere des Mantels (1) mündet;
wobei ferner Mittel wie ein Lüfter (V) vorgesehen sind, um die von diesem Gas/Luft-Wärmetauscher-Rekuperator (9) erwärmte Luft an den Eingang des Brenners (6) zu übertragen.

## Claims

1. A condensation heat exchanger associated with a gas or fuel-oil burner (6), which comprises at least one tube bundle (2) through which a fluid to be heated, circulates, in particular cold water, and which is mounted inside a gas-impermeable jacket (1), said tube bundle (2) being exposed to hot gases generated by the burner (6), while the jacket (1) has a flue-gas evacuation sleeve (122), said jacket (1) having a wall portion having the configuration of a compartment (11, 12) accommodating a gas/air heat exchanger and recuperator (9) capable of recovering some of the heat conveyed by the flue gases leaving the tube bundle (2) and channelled toward the evacuation sleeve (122) in order to transfer it to air captured outside the exchanger and which feed the burner (6),
**characterized in that**:
- on one hand, said compartment consists of a substantially flat pocket that extends vertically and is open at its top and bottom ends, said gas/air heat exchanger and recuperator (9) being inserted in this compartment,
- on the other hand, said gas/air heat exchanger and recuperator (9) includes two series of metal-walled adjacent, alternating vertical tubings (90-900), namely a first series (90) allowing the passage of the still-hot gases circulating toward the evacuation sleeve (122) and a second series (900) allowing the passage of the outside air to be heated,
- and **in that** one of said series of vertical tubings (900) is open at the top and bottom, allowing the top-to-bottom passage of the outside air to be heated, while the other series of vertical tubings (90) opens out inside the jacket (1) via entry (120) and exit (121) openings for the flue gases made in the wall (12) of the compartment, in its base and in its upper part, respectively,
- means, such as a ventilator (V), also being provided in order to transfer the air heated by said gas/air heat exchanger and recuperator (9) to the entrance of said burner (6).

2. The heat exchanger as claimed in claim 1, **characterized in that** said tubings (90, 900) have a flattened cross section and are adjacent via their faces corresponding to the larger sides of this cross section.

3. The heat exchanger as claimed in claim 2, **characterized in that** said gas/air heat exchanger and recuperator (9) is produced from a single, concertina-folded sheet of metal.

4. The heat exchanger as claimed in one of the preceding claims, **characterized in that** said gas/air heat exchanger and recuperator (9) is removable and may easily the taken out of the compartment, in particular to be able to be washed.

5. The heat exchanger as claimed in claim 4, **characterized in that** said gas/air heat exchanger and recuperator (9) has the configuration of a substantially parallelepipedal rectangular cassette that can be pushed into the compartment by means of translation from top to bottom, this cassette being provided with a rigid tubular casing (8) of rectangular cross section, open at its lower and upper ends, said adjacent, alternating vertical tubings being arranged hermetically inside said casing (8), suitable windows (80, 81) made in a larger face of the casing, in its base and in its top part, allowing, respectively, the entry and the exit of the flue gases in the first series of tubings (90).

6. The heat exchanger as claimed in claim 5, **characterized in that** said bottom (80) and top (81) windows are dimensioned and positioned such that each one is facing the entry opening (120) and respectively the exit opening (121) for the flue gases, made in the wall (12) of the compartment, when the cassette is fully inserted inside said compartment.

7. The heat exchanger as claimed in claim 6, **characterized in that** said cassette is equipped in its base with a peripheral seal (95) capable of guaranteeing its leaktightness in the bottom of the compartment.

8. The heat exchanger as claimed in one of claims 5 to 7, **characterized in that** said casing is provided in its upper part with a peripheral rim (82) capable of ensuring that it bears and/or is fixed against the upper edge of the compartment.

9. The heat exchanger as claimed in one of claims 5 to 8 , **characterized in that** said gas/air heat exchanger and recuperator (9) includes a pair of plates (93, 93') in the form of grilles having solid areas that are fixed by nesting and adhesive bonding to the upper and lower edges of the two series of tubings (90-900) such that they block off those of the first series (90) receiving the flue gases, these solid areas being separated by slits that form the mouths of the tubings of the second series (900) that allow the passage of the outside air to be heated.

10. The heat exchanger as claimed in one of the preceding claims, **characterized in that** the bottom of the exchanger has orifices (130, 110) for recovering and evacuating the condensates generated both by the condensation of the flue gases and by the condensation of the combustion air inside the gas/air heat exchanger and recuperator (9).

11. A condensation heat exchanger, associated with a gas or fuel-oil burner (6), which comprises two coaxial tube bundles (2a, 2b) placed end-to-end, one of which acts as primary exchanger and the other of which acts as secondary exchanger, each of these bundles consisting of a tube or of a group of tubes arranged end-to-end, forming a helical coil, in which the wall of the tube(s) is produced from a material that is a good conductor of heat and has a flattened, oval cross section, the major axis of which is perpendicular or approximately perpendicular to the axis (X-X') of the helix, while the width of the gap separating two adjacent turns is constant and particularly smaller than the thickness of said cross section, said bundles (2a, 2b) being mounted securely inside a gas-impermeable jacket (1), means being provided in order to circulate at least one fluid to be heated, in particular cold water, inside the tube(s) forming said bundles (2a, 2b), said jacket (1) having a flue-gas evacuation sleeve (122), the exchanger being arranged such that the hot gases generated by the burner (6) flow radially, or approximately radially, through said bundles, passing through the gaps separating its turns, a deflection plate (7) also being interposed between these two bundles and arranged in such a manner that the hot gases generated by the burner first flow through the primary exchanger (2a), flowing through the gaps separating its turns from inside to the outside, then the secondary exchanger (2b), flowing through the gaps separating its turns from the outside to the inside, after which they are evacuated to the outside via said sleeve (122), said jacket (1) having a wall portion having the configuration of a compartment (11, 12) and in that the condensation exchanger is provided with an additional gas/air heat exchanger/recuperator (9) that is inserted inside said compartment (11, 12) and is adapted for recovering some of the heat conveyed by the still-hot gases circulating between the secondary exchanger and the evacuation sleeve (122) and transferring it to air captured outside the exchanger and which feed the burner,
**characterized in that**:
- on one hand, said compartment consists of a substantially flat pocket that extends vertically and is open at its top and bottom ends, said gas/air heat exchanger and recuperator (9) being inserted in this compartment,
- on the other hand, said gas/air heat exchanger and recuperator (9) includes two series of metal-walled adjacent, alternating vertical tubings (90-900), namely a first series (90) allowing the passage of the still-hot gases circulating between the secondary exchanger and the evacuation sleeve (122) and a second series (900) allowing the passage of the outside air to be heated,
- **in that** one of said series of vertical tubings (900) is open at the top and bottom, allowing the top-to-bottom passage of the outside air to be heated, while the other series of vertical tubings (90) opens out inside the jacket (1) via entry (120) and exit (121) openings for the flue gases, made in the wall (12) of the compartment, in its base and in its upper part, respectively,
- means, such as a ventilator (V), also being provided in order to transfer the air heated by said gas/air heat exchanger and recuperator (9) to the entrance of said burner (6).
